# EUROPÄISCHE PATENTSCHRIFT

(11) **EP 3 665 031 B1**
(45) Veröffentlichungstag und Bekanntmachung des Hinweises auf die Patenterteilung: **29.07.2026**
(21) Anmeldenummer: 18737206.5
(22) Anmeldetag: 28.06.2018
(51) Int. Cl.: B60L 5/00, H01R 41/00, B60L 5/32, F15B 11/028

(54) **ELEKTROPNEUMATISCH GEREGELTE ANSTEUERUNG EINES STROMABNEHMERS**
ELECTROPNEUMATICALLY REGULATED CONTROL OF A CURRENT COLLECTOR
COMMANDE ÉLECTROPNEUMATIQUE D'UN COLLECTEUR DE COURANT

(30) Priorität: 11.08.2017 DE 102017214111
(43) Veröffentlichungstag der Anmeldung: 17.06.2020
(73) Patentinhaber: KNORR-BREMSE Systeme für Schienenfahrzeuge GmbH, 80809 München (DE)
(72) Erfinder: VOHLA, Manfred, 1130 Wien (AT); HASELSTEINER, Kurt, 2340 Möding (AT)
(86) Internationale Anmeldenummer: PCT/EP2018/067497
(87) Internationale Veröffentlichungsnummer: WO 2019/029901

(56) Entgegenhaltungen:
- EP-A1- 1 539 528
- EP-A1- 1 862 347
- DE-A1- 10 126 042
- DE-A1- 102004 055 030

## Beschreibung

Elektropneumatisch geregelte Ansteuerung eines Stromabnehmers Die Erfindung betrifft eine Vorrichtung zum Steuern einer Anpresskraft eines Stromabnehmers eines Fahrzeugs (beispielsweise eines Triebfahrzeugs) an eine Fahrleitung, ein Verfahren unter Verwendung einer derartigen Vorrichtung sowie ein Fahrzeug mit einer derartigen Vorrichtung.

Stromabnehmer elektrischer Triebfahrzeuge benötigen eine definierte Anpresskraft an die Fahrleitung. Die Fahrleitung ist im gegenständlichen Fall eine Oberleitung konventioneller Ausführung oder innovativer Ausführung wie z.B. Deckenstromschienen.

Ist diese Anpresskraft zu klein, fängt der Stromabnehmer zu springen an. Die daraus resultierenden Kontaktunterbrechungen und Lichtbögen beeinträchtigen die Lebensdauer von Stromabnehmer-Schleifleisten und Fahrleitungen. Ist diese Anpresskraft zu groß, wird die Fahrleitung übermäßig angehoben. Bei unzulässigen Krafteinleitungen in die Fahrleitung kann deren mechanische Positionierung nicht sichergestellt werden, ein "Einfädeln" des Stromabnehmers und Herunterreißen der Fahrleitung sind typische Konsequenzen.

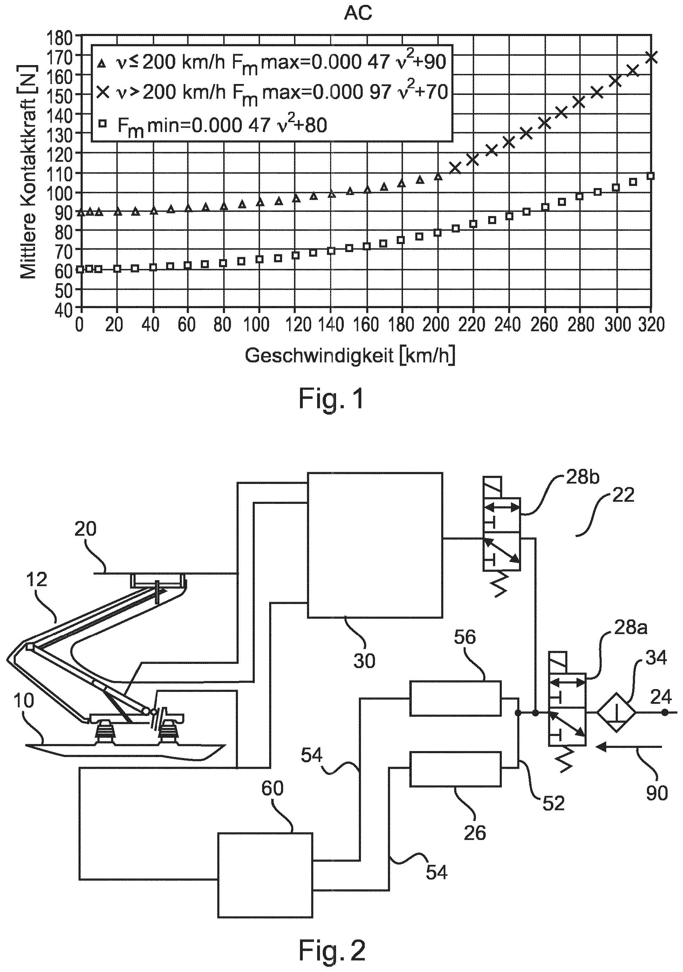

Die notwendigen Anpresskräfte insbesondere bei Hochgeschwindigkeitsbetrieb (>200km/h) sind stark ansteigend bis etwa zum Doppelten des Stillstandwertes, wie in Fig. 1 gezeigt. Um diesen Anstieg zu gewährleisten, werden nach Stand der Technik Windleitbleche im Stromabnehmer verwendet, die einerseits aerodynamisch eine Zusatzkraft aufbringen und andererseits dynamische Auftriebskräfte kompensieren. Nachteilig ist hierbei, dass die Auslegung und Handhabung dieser Windleitbleche nicht einfach an unterschiedliche Betriebssituationen anpassbar ist. Beispielsweise ist die aerodynamische Zusatzkraft in Hochgeschwindigkeitstunneln signifikant höher als auf freier Strecke. Diese Zusatzkraft ist jedoch auch von Fahrzeugform, Tunnelquerschnitt, Versperrungsmaß (Verhältnis Fahrzeugquerschnitt zu Tunnelquerschnitt), Querschnittssprüngen und Position des Stromabnehmers im Zugverband abhängig. Auch ist diese Zusatzkraft fahrtrichtungsabhängig (beispielweise je nach Spieß- oder Kniegang eines asymmetrischen Einholm-Stromabnehmers).

Zusätzlich bestehen zunehmend Anforderungen, die Stromabnehmer-Anpresskraft im Stillstand anzuheben, um Überhitzung und Beschädigung von Schleifleiste und Fahrleitungsdraht im Kontaktpunkt bei hohem Stromfluss durch Beleuchtung, Klimaanlagen und Fahrgastinformationssysteme bei bereitgestellten Fahrzeugen zu vermeiden. Windleitbleche können jedoch keine Zusatzkraft aufbringen, wenn sich das Fahrzeug im Stillstand befindet.

Aus dem Stand der Technik sind heute einstufige und zweistufige (festeingestellte, aber justierbare) Drücke bekannt. In einzelnen Fällen werden bereits elektronpneumatisch (ep) geregelte Druckansteuerungen verwendet, wie sie z.B. aus EP 1 539 528 A1 bekannt sind. Darin wird gezeigt, wie die von Bahnbetreibern geforderte Rückfallebene bei Störung des ep-Reglers über ein Umschaltventil erfolgt. Ein ep-Regler wird im Störungsfall auf ein festeingestelltes justierbares Druckminderventil umgeschaltet. Der ep-Regler steuert die Anpresskraft im Regelbetrieb des Fahrzeuges. Nachteilig ist hierbei, dass die Anpresskraft über den Regler nicht genau genug angesteuert werden kann und hoher Luftverbrauch verursacht wird.

Die EP 1 862 347 A1 offenbart eine Vorrichtung zur Anpassung des Anpressdrucks eines Stromabnehmers eines Fahr-zeugs an eine Fahrleitung. Hierzu wird ein Druckregler verwendet, welcher über einen separaten pneumatischen Zusatzsteuerkreis gesteuert wird. Somit kann der Anpressdruck des Stromabnehmers den verschiedenen Fahrsituationen angepasst werden.

Der Erfindung liegt daher die Aufgabe zu Grunde, eine Vorrichtung und ein Verfahren unter Verwendung einer derartigen Vorrichtung zu schaffen, mit denen eine genauere Ansteuerung der benötigten Anpresskräfte zwischen einem Stromabnehmer und einer Fahrleitung möglich ist, die besser zu verschiedenen Betriebssituationen passen.

Diese Aufgabe wird erfindungsgemäß mit einer Vorrichtung zur Steuerung oder Regelung einer Anpresskraft zwischen einer Fahrleitung und einem Stromabnehmer eines Fahrzeugs nach Anspruch 1 gelöst. Weiterhin wird die Aufgabe mit einem Verfahren nach Anspruch 13 gelöst. Vorteilhafte Ausgestaltungen der Erfindung sind in den Unteransprüchen enthalten.

Erfindungsgemäß besteht die Lösung der Aufgabe in einer Vorrichtung zum Steuern einer Anpresskraft zwischen einer Fahrleitung und einem Stromabnehmer eines Fahrzeugs, die pneumatisch oder hydraulisch betätigt wird. Dabei kann z.B. Luft oder Öl als Druckmedien verwendet werden. Während des Hebens oder Senkens des Stromabnehmers befindet sich der Mediendruck im Gleichgewicht mit der Schwerkraft (Gewicht) des Stromabnehmers. Die benötigte Anpresskraft erfolgt durch eine Druckerhöhung eines

Arbeitsdrucks, der durch Steuerung oder Regelung oder beiden eingestellt wird. In gewöhnlichen Fahrsituationen - innerhalb eines Toleranzbandes der Stromabnehmeranpresskraft - wird der Arbeitsdruck nur mittels eines Basisdrucks eingesteuert. Wenn die Betriebssituation eine zusätzliche Anpresskraft erfordert, wird ein Zusatzdruck zu dem Basisdruck addiert, um zusammen den Arbeitsdruck zu erhöhen.

In einem ersten Ausführungsbeispiel gemäß der Erfindung sind der Basisdruck und der Zusatzdruck in einem Arbeitsdrucksteuerkreis addiert, um den addierten Druck als der Arbeitsdruck zu bilden.

In einem zweiten Ausführungsbeispiel gemäß der Erfindung ist dazu noch eine Einstellvorrichtung vorgesehen, um den Basisdruck und den Zusatzdruck dort zu addieren, um den Leistungsdruck mit dem addierten Druck dort zu steuern, und um einen Arbeitsdruck als gesteuerten Leistungsdruck zu bilden. Der Vorteil dabei liegt darin, dass der Basisdruck und der Zusatzdruck mit Kleinquerschnitten, also kleinen und konstanten Volumina eingestellt werden können, wobei der Leistungsdruck und der Arbeitsdruck mit Großquerschnitten, also großen und variablen Volumina, vorgesehen sind. Eine Vorsteuerdruckregelung kann üblicherweise 1:1 auf den volumenstarken Arbeitsdruck übersetzt werden. Zusätzlich kann in einer Ausführungsvariante ein Übersetzungsverhältnis anderes als 1:1 realisiert werden. Zum Beispiel, wenn das Übersetzungsverhältnis 1:5 gewählt ist, wirken sich 10 bar im Vorsteuerkreis mit einem Ausgangsdruck von 2 bar am Ausgang des Relaisventils aus. Eine Abweichung ist in diesem Fall auch proportional reduziert. Wenn zum Beispiel die Abweichung im Vorsteuerkreis ± 0,1 bar beträgt, beträgt die Abweichung im Ausgang des Relaisventils nur ± 0,02 bar, was einer absoluten Reduzierung der Abweichung entspricht, und somit eine Erhöhung der Steuergenauigkeit und eine Verringerung der Hysterese ermöglicht.

Erfindungsgemäß ist eine solche Vorrichtung mit einem Basissteuerkreis, einem Zusatzsteuerkreis und einem Arbeitsdrucksteuerkreis vorgesehen. Der Basissteuerkreis weist eine Basissteuerkreis-Einstellvorrichtung (z.B. ein Druckminderventil) zur Einstellung des Basisdrucks auf. Der Zusatzsteuerkreis weist eine Steuervorrichtung (z.B. einen Regler) zur Einstellung des Zusatzdrucks auf, wobei der Basisdruck und der Zusatzdruck an einer Schnittstelle zusammengeführt werden, um den Arbeitsdruck in den Arbeitsdrucksteuerkreis abzugeben, wo weitere Elemente zur Beeinflussung von Druck oder Volumenstrom zwischengeschaltet werden können. Zusätzlich kann der Arbeitsdrucksteuerkreis so konfiguriert sein, dass der Arbeitsdruck auf einen maximalen Wert begrenzt wird, um einen zu hohen Druck auf den Stromabnehmer bzw. die Fahrleitung zu vermeiden, um eine Beschädigung zu verhindern.

Neben dem Regler weist der Zusatzsteuerkreis vorzugweise einen Drucksensor und zwei Regelventile auf. Der Drucksensor ist vorgesehen, um dem Regler des Zusatzsteuerkreises Drucksignale zur Verfügung zu stellen. Durch eine große Auflösung des Drucksensors können ein tiefes Regelniveau (kleine Drücke) der Steuervorrichtung des Zusatzsteuerkreises und eine kleinere Toleranz (höhere Steuergenauigkeit) bei gleichzeitig kleinerer Hysterese realisiert werden. Die Regelventile dienen nicht nur dazu, den Zusatzdruck zu regeln, sondern sie sind auch so ausgelegt, dass sie ein etwaiges Driften der Basissteuerkreis-Einstellvorrichtung (des Basisdrucks) in beide Richtungen kompensieren können (zusätzliche Kalibrierfunktion).

In einer vorteilhaften Ausgestaltung der Erfindung ist ein Zustandsautomat vorgesehen, um den Basisdruck / Zusatzdruck / Arbeitsdruck zu überwachen. Wenn einer der Drücke eine Mindestdruckvorgabe unterschreitet, eine Höchstdruckvorgabe überschreitet, oder von einer Bandbreite zwischen Soll- und Ist-Wert abweicht, findet eine Schnellabschaltung statt. Die Schnellabschaltung wirkt auf den Zusatzsteuerkreis und schaltet diesen ab. Der Basisdruck bleibt für den Arbeitsdruck erhalten. Andernfalls kann über ein Hauptbestätigungsventil oder durch ein nahe am Stromabnehmer platziertes Kolbenventil oder Notbremsventil mit internem Druckvergleich und Referenzdruckvolumen auch eine vollständige Entlüftung des Arbeitsdrucks erfolgen. Anstelle eines Zustandsautomates ist beispielweise auch eine Elektro-, Elektronik- oder Mikroprozessoreinheit (gegebenenfalls mit einer gemäß einem Sicherheitslevel eingestuften Software) möglich. Vergleichssignale für diese Überwachungseinrichtung können aus dem Drucksensor des Zusatzsteuerkreises und / oder einem für den Arbeitsdruck vorgesehenen Drucksensor gewonnen werden.

Ein Fahrzeug, das mit der Vorrichtung ausgerüstet ist, weist durch eine genauer angepasste Anpresskraft zwischen der Fahrleitung und dem Stromabnehmer verbesserte und sichere Fahreigenschaften auf.

Im Folgenden werden zwei Ausführungsbeispiele der Erfindung anhand der Figuren näher erläutert.

Es zeigen:
**Fig.** 1 die benötigte Anpresskraft abhängig von der Fahrzeuggeschwindigkeit gemäß dem Stand der Technik;
**Fig.** 2 eine schematische Darstellung einer Steuervorrichtung eines Stromabnehmers gemäß eines ersten Ausführungsbeispiels der Erfindung;
**Fig.** 3 eine schematische Darstellung einer Steuervorrichtung eines Stromabnehmers gemäß eines zweiten Ausführungsbeispiels der Erfindung;
**Fig.** 4 eine detaillierte Darstellung von einem Abschnitt der Steuervorrichtung gemäß dem ersten Ausführungsbeispiel der Erfindung;

Fig. 2 zeigt einen Teil eines Fahrzeugs 10, einen Stromabnehmer 12, eine Fahrleitung 20 und eine Steuervorrichtung 22 gemäß des ersten Ausführungsbeispiels der Erfindung. Das Druckmedium Luft strömt in Einströmungsrichtung 90 von einem Druckeingang 24 über einen Luftfilter 34 in die Steuervorrichtung 22 ein.

Wenn sich das Fahrzeug 10 im Betrieb oder Stand-by-Modus befindet, ist die Steuervorrichtung 22 über ein Umschaltventil 28a eingeschaltet. Umschaltventil 28b und Einrichtung 30 stellen Überwachungseinrichtungen dar.

Während des Betriebs des Fahrzeugs 10 wird eine bestimmte Anpresskraft zwischen dem Stromabnehmer 12 und der Fahrleitung 20 benötigt, um einen sicheren Übergang der Energie von der Fahrleitung 20 über den Stromabnehmer 12 zu dem Fahrzeug 10 zu gewährleisten. Dieser Arbeitsdruck wird durch einen Basissteuerkreis 56 und einen Zusatzsteuerkreis 26 zu einem Arbeitsdruckregelkreis 60 erzielt.

Ein Leistungsdruck wird einer ersten Druckmedienleitung 52, dem Basissteuerkreis 56, und dem Zusatzsteuerkreis 26 zugeführt. Der Basissteuerkreis 56 stellt einen Basisdruck ein und der Zusatzsteuerkreis 26 stellt einen Zusatzdruck ein, wobei der Basisdruck und der Zusatzdruck über je eine zweite Druckmedienleitung 54 weiter zu dem Arbeitsdruckregelkreis 60 geführt werden, um den Arbeitsdruck dort als eine Addition des Basisdrucks und des Zusatzdrucks zu bilden.

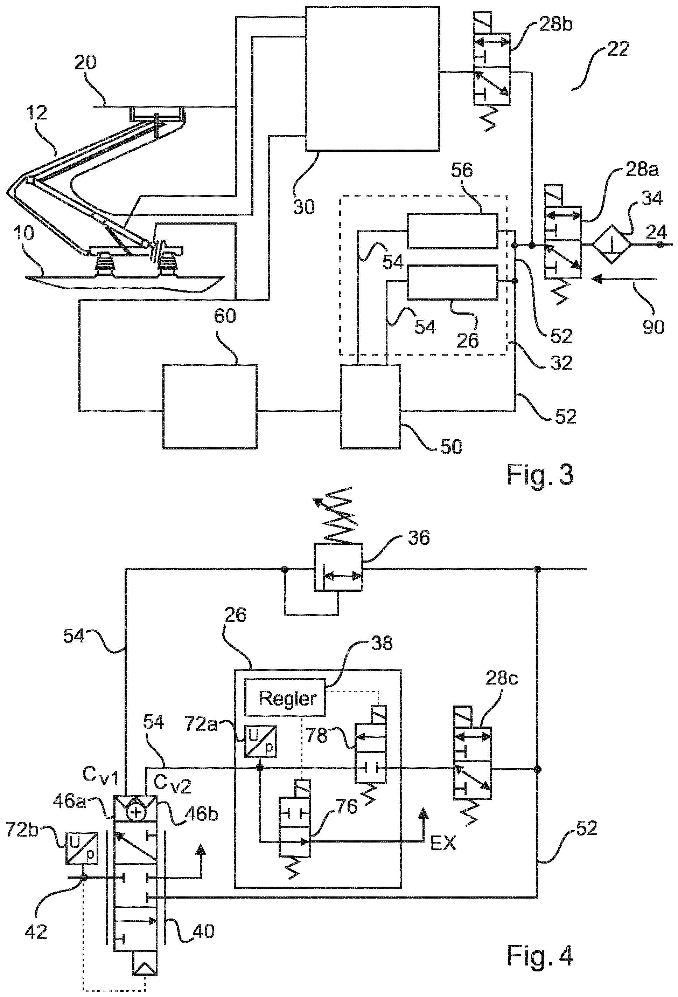

Fig. 3 zeigt einen Teil eines Fahrzeugs 10, einen Stromabnehmer 12, eine Fahrleitung 20 und eine Steuervorrichtung 22 gemäß des zweiten Ausführungsbeispiels der Erfindung. Das Druckmedium Luft strömt in Einströmungsrichtung 90 von einem Druckeingang 24 über einen Luftfilter 34 in die Steuervorrichtung 22 ein.

Wenn sich das Fahrzeug 10 im Betrieb oder Stand-by-Modus befindet, ist die Steuervorrichtung 22 über ein Umschaltventil 28a eingeschaltet. Umschaltventil 28b und Einrichtung 30 stellen Überwachungseinrichtungen dar.

Während des Betriebs des Fahrzeugs 10 wird eine bestimmte Anpresskraft zwischen dem Stromabnehmer 12 und der Fahrleitung 20 benötigt, um einen sicheren Übergang der Energie von der Fahrleitung 20 über den Stromabnehmer 12 zu dem Fahrzeug 10 zu gewährleisten. Dieser Arbeitsdruck wird durch einen Vorsteuerkreis 32 und eine Einstellvorrichtung (50) zu einem Arbeitsdruckregelkreis 60 erzielt.

Der Vorsteuerkreis 32 weist einen Basissteuerkreis 56 und einen Zusatzsteuerkreis 26 auf. Ein Leistungsdruck wird einer ersten Druckmedienleitung 52, dem Basissteuerkreis 56, und dem Zusatzsteuerkreis 26 zugeführt. Der Basissteuerkreis 56 stellt einen Basisdruck ein und der Zusatzsteuerkreis 26 stellt einen Zusatzdruck ein, wobei der Basisdruck und der Zusatzdruck über je eine zweite Druckmedienleitung 54 weiter zu der Einstellvorrichtung 50 geführt werden, um den Leistungsruck von der ersten Druckmedienleitung 52 darin zu steuern.

Fig. 4 zeigt eine detaillierte Darstellung von einem Abschnitt der Steuervorrichtung 22 in Fig. 3. Der Vorsteuerkreis 32 weist ein Druckminderventil 36, ein Umschaltventil 28c, einen Zusatzsteuerkreis 26 einschließlich eines Reglers 38, eines Drucksensors 72a, eines ersten Regelventiles 76 zum Druckabbau, eines zweiten Regelventiles 78 zum Druckaufbau, ein Relaisventil 40 und einen Drucksensor 72b auf.

Das Druckminderventil 36 ist zur Einstellung des Basisdrucks ausgelegt, und der Regler 38 ist zur Einstellung des Zusatzdrucks ausgelegt, wobei der Basisdruck und der Zusatzdruck jeweils über die zweite Druckmedienleitung 54 zu Eingängen 46a und 46b des Relaisventils 40 geführt sind. Das Relaisventil 40 ist so ausgelegt, dass eine Addition des Basisdrucks und des Zusatzdrucks nach den Eingängen 46a und 46b stattfindet, um den Leistungsdruck von der ersten Druckmedienleitung 52 mit dem addierten Druck zu steuern und den Arbeitsdruck von einem Ausgang 42 des Relaisventils 40 auszulassen. Das Umschaltventil 28c ist vorgesehen, um den Zusatzsteuerkreis im Notfall auszuschalten. Die Drucksensoren 72a und 72b sind vorgesehen, um den Zusatzdruck im Zusatzsteuerkreis 26 und den Arbeitsdruck am Ausgang 42 des Relaisventils zu messen.

### BEZUGSZEICHENLISTE

- 10: Fahrzeug
- 12: Stromabnehmer
- 20: Fahrleitung
- 22: Steuervorrichtung
- 24: Druckeingang
- 26: Zusatzsteuerkreis
- 28a, 28b, 28c: Umschaltventil
- 30: Einrichtung
- 32: Vorsteuerkreis
- 34: Luftfilter
- 36: Druckminderventil
- 38: Regler
- 40: Relaisventil
- 42: Ausgang eines Relaisventils
- 46, 46a, 46b: Eingang eines Relaisventils
- 50: Einstellvorrichtung
- 52: Erste Druckmedienleitung
- 54: Zweite Druckmedienleitung
- 56: Basissteuerkreis
- 60: Arbeitsdrucksteuerkreis
- 72a, 72b: Drucksensor
- 76: Erstes Regelventil
- 78: Zweites Regelventil
- 90: Richtungspfeil

## Patentansprüche

1. Vorrichtung (22) zur Steuerung einer Anpresskraft eines Stromabnehmers eines Fahrzeugs (10) an eine Fahrleitung (20), wobei die Anpresskraft mittels eines pneumatischen oder hydraulischen Arbeitsdrucks betätigt wird, aufweisend:
- einen Basissteuerkreis (56),
- einen Zusatzsteuerkreis (26),
- einen Arbeitsdrucksteuerkreis (60),
wobei der Basissteuerkreis (56) eine Basissteuerkreis-Einstellvorrichtung aufweist, die dazu konfiguriert ist, aus einem zur Verfügung gestellten Leistungsdruck einen Basisdruck einzustellen,
wobei der Zusatzsteuerkreis (26) eine Steuervorrichtung aufweist, die dazu konfiguriert ist, aus dem zur Verfügung gestellten Leistungsdruck einen Zusatzdruck einzustellen,
**dadurch gekennzeichnet dass**, der Basisdruck und der Zusatzdruck an einer Schnittstelle zusammengeführt werden, um den Arbeitsdruck in den Arbeitsdrucksteuerkreis (60) durch Addition des Zusatzdrucks zu dem Basisdruck zu erhöhen.

2. Vorrichtung (22) nach Anspruch 1, wobei
der Arbeitsdrucksteuerkreis (60) derart ausgelegt ist, dass der Basisdruck und der Zusatzdruck zusammenaddiert werden und der addierte Druck den Arbeitsdruck bildet.

3. Vorrichtung (22) nach Anspruch 1, wobei
ein Vorsteuerkreis (32) vorgesehen ist, in dem der Basisdruck und der Zusatzdruck als Vorsteuerdrücke gesteuert werde, und
eine Einstellvorrichtung (50) vorgesehen ist, die dazu konfiguriert ist, einen zur Verfügung gestellten Leistungsdruck in Abhängigkeit von Basisdruck und Zusatzdruck aus dem Vorsteuerkreis (32) einzustellen und als Arbeitsdruck in den Arbeitsdrucksteuerkreis (60) abzugeben.

4. Vorrichtung (22) nach Anspruch 3, **dadurch gekennzeichnet, dass** die Basissteuerkreis-Einstellvorrichtung des Basissteuerkreises (56) durch ein Druckminderventil (36) zur Einstellung des Basisdrucks gebildet ist.

5. Vorrichtung (22) nach Anspruch 3 oder 4, **dadurch gekennzeichnet, dass** die Steuervorrichtung des Zusatzsteuerkreises (26) durch einen Regler (38) zur Einstellung des Zusatzdrucks gebildet ist.

6. Vorrichtung (22) nach einem der vorangegangenen Ansprüche 3 bis 5, **dadurch gekennzeichnet, dass** im Leistungsdruckkreis vor einer Einleitstelle des Leistungsdrucks in den Vorsteuerkreis (32) und den Arbeitsdrucksteuerkreis (60) ein Umschaltventil (28a) als Ein- und Ausschaltventil vorgesehen ist.

7. Vorrichtung (22) nach einem der vorangegangenen Ansprüche 3 bis 6, **dadurch gekennzeichnet, dass** die Einstellvorrichtung (50) so konfiguriert ist, dass der Basisdruck und der Zusatzdruck addiert werden und mit diesem zusammengesetzten Druck der Arbeitsdruck einstellbar ist.

8. Vorrichtung (22) nach einem der vorangegangenen Ansprüche 3 bis 7, **dadurch gekennzeichnet, dass** der Zusatzsteuerkreis (26) einen Drucksensor (72a) und zwei Regelventile (76, 78) aufweist, mit denen der Basisdruck in beiden Richtungen kalibriert werden kann.

9. Vorrichtung (22) nach einem der vorangegangenen Ansprüche, **dadurch gekennzeichnet, dass** ein Zustandsautomat zum Überwachen des Basisdrucks / Zusatzdrucks / Arbeitsdrucks vorgesehen ist, der derart konfiguriert ist, dass er eine Abschaltung des Zusatzdrucks, und / oder des Basisdrucks und / oder des Arbeitsdrucks in festzulegenden Situationen vornimmt.

10. Vorrichtung (22) nach einem der vorangegangenen Ansprüche 1 bis 8, **dadurch gekennzeichnet, dass** eine Elektro-, Elektronik oder Mikroprozessoreinheit zum Überwachen des Basisdrucks / Zusatzdrucks / Arbeitsdrucks vorgesehen ist, der derart konfiguriert ist, dass er eine Abschaltung des Zusatzdrucks, und / oder des Basisdrucks und / oder des Arbeitsdrucks in festzulegenden Situationen vornimmt.

11. Vorrichtung (22) nach einem der vorangegangenen Ansprüche, **dadurch gekennzeichnet, dass** ein Umschaltventil (28c) vor der Steuervorrichtung des Zusatzsteuerkreises (26) vorgesehen ist, um den Zusatzsteuerkreis im Notfall auszuschalten.

12. Vorrichtung (22) nach einem der vorangegangenen Ansprüche, **dadurch gekennzeichnet, dass** ein Umschaltventil (28c) nach der Steuervorrichtung des Zusatzsteuerkreises (26) vorgesehen ist, um den Zusatzsteuerkreis im Notfall auszuschalten.

13. Verfahren zum Steuern einer Anpresskraft eines Stromabnehmers (12) eines Fahrzeugs (10) an eine Fahrleitung (20), wobei die Anpresskraft mittels eines pneumatischen oder hydraulischen Arbeitsdrucks betätigt wird, mit den folgenden Schritten:
- Einstellen eines Basisdrucks in einem Basissteuerkreis (56),
- Einstellen eines Zusatzdrucks in einem Zusatzsteuerkreis (26),
**gekennzeichnet durch**
- Addieren des Basisdrucks und des Zusatzdrucks,
- Einleiten eines Arbeitsdrucks in einen Arbeitsdrucksteuerkreis (60), wobei der addierte Druck den Arbeitsdruck bildet und der Arbeitsdruck durch Addition des Zusatzdrucks zum dem Basisdruck erhöht wird.

14. Verfahren gemäß Anspruch 13, wobei der Arbeitsdruck durch einen Druck von einem Vorsteuerkreis (32) geregelt wird, wobei der Druck des Vorsteuerkreises (32) durch Addition von Basisdruck und Zusatzdruck gebildet wird.

15. Fahrzeug (10) mit mindestens einer Vorrichtung (22) gemäß einem der Ansprüche 1 bis 12.

## Claims

1. A device (22) for controlling a pressing force from a current collector of a vehicle (10) on an overhead line (20), wherein the pressing force is actuated by means of a pneumatic or hydraulic working pressure, having:
- a basic control circuit (56),
- an additional control circuit (26),
- a working pressure control circuit (60),
wherein the basic control circuit (56) has a basic control circuit setting device which is configured to set a basic pressure from a power pressure which is made available,
wherein the additional control circuit (26) has a control device which is configured to set an additional pressure from the power pressure which is made available,
**characterized in that** the basic pressure and the additional pressure are combined at an interface, in order to increase the working pressure in the working pressure control circuit (60) by adding the additional pressure to the basic pressure.

2. The device (22) as claimed in claim 1, wherein
the working pressure control circuit (60) is configured in such way that the basic pressure and the additional pressure are added together and the added pressure forms the working pressure.

3. The device (22) as claimed in claim 1, wherein
a pilot control circuit (32) is provided in which the basic pressure and the additional pressure are controlled as pilot control pressures, and
a setting device (50) is provided which is configured to set, in accordance with the basic pressure and the additional pressure from the pilot control circuit (32), a power pressure which is made available, and to output said power pressure as a working pressure into the working pressure control circuit (60).

4. The device (22) as claimed in claim 3, **characterized in that** the basic control circuit setting device of the basic control circuit (56) is formed by a pressure reducing valve (36) for setting the basic pressure.

5. The device (22) as claimed in claim 3 or 4, **characterized in that** the control device of the additional control circuit (26) is formed by a regulator (38) for setting the additional pressure.

6. The device (22) as claimed in one of the preceding claims 3 to 5, **characterized in that** a switching valve (28a) is provided as a switch-on and switch-off valve in the power pressure circuit upstream of an introduction point for the power pressure into the pilot control circuit (32) and the working pressure control circuit (60).

7. The device (22) as claimed in one of the preceding claims 3 to 6, **characterized in that** the setting device (50) is configured in such a way that the basic pressure and the additional pressure are added and the working pressure can be set with this combined pressure.

8. The device (22) as claimed in one of the preceding claims 3 to 7, **characterized in that** the additional control circuit (26) has a pressure sensor (72a) and two regulating valves (76, 78) with which the basic pressure can be calibrated in both directions.

9. The device (22) as claimed in one of the preceding claims, **characterized in that** an automatic state machine is provided for monitoring the basic pressure / additional pressure / working pressure, which machine is configured in such a way that it switches off the additional pressure and/or the basic pressure and/or the working pressure in situations which are to be defined.

10. The device (22) as claimed in one of the preceding claims 1 to 8, **characterized in that** an electric unit, electronic unit or microprocessor unit is provided for monitoring the basic pressure / additional pressure / working pressure, which unit is configured in such a way that it switches off the additional pressure and/or the basic pressure and/or the working pressure in situations which are to be defined.

11. The device (22) as claimed in one of the preceding claims, **characterized in that** a switching valve (28c) is provided upstream of the control device of the additional control circuit (26) in order to switch off the additional control circuit in an emergency.

12. The device (22) as claimed in one of the preceding claims, **characterized in that** a switching valve (28c) is provided downstream of the control device of the additional control circuit (26) in order to switch off the additional control circuit in an emergency.

13. A method for controlling a pressing force from a current collector (12) of a vehicle (10) on an overhead line (20), wherein the pressing force is actuated by means of a pneumatic or hydraulic working pressure, having the following steps:
- setting a basic pressure in a basic control circuit (56),
- setting an additional pressure in an additional control circuit (26),
**characterized by**
- adding the basic pressure and the additional pressure.
- introducing a working pressure into a working pressure control circuit (60), wherein the added pressure forms the working pressure and the working pressure is increased by adding the additional pressure to the basic pressure.

14. The method according to claim 13, wherein the working pressure is regulated by a pressure from a pilot control circuit (32), wherein the pressure of the pilot control circuit (32) is formed by adding the basic pressure and the additional pressure.

15. A vehicle (10) having at least one device (22) as claimed in one of claims 1 to 12.

## Revendications

1. Dispositif (22) de commande d'une force de contact d'un collecteur de courant d'un véhicule (10) sur une ligne aérienne (20), dans lequel la force de contact est actionnée au moyen d'une pression de travail pneumatique ou hydraulique, présentant :
- un circuit de commande de base (56),
- un circuit de commande supplémentaire (26),
- un circuit de commande de pression de travail (60),
dans lequel le circuit de commande de base (56) présente un dispositif de réglage de circuit de commande de base qui est configuré afin de régler une pression de base à partir d'une pression de puissance mise à disposition,
dans lequel le circuit de commande supplémentaire (26) présente un dispositif de commande qui est configuré afin de régler une pression supplémentaire à partir de la pression de puissance mise à disposition,
**caractérisé en ce que** la pression de base et la pression supplémentaire sont rassemblées au niveau d'une interface afin d'augmenter la pression de travail dans le circuit de commande de pression de travail (60) en additionnant la pression supplémentaire à la pression de base.

2. Dispositif (22) selon la revendication 1, dans lequel
le circuit de commande de pression de travail (60) est conçu afin que la pression de base et la pression supplémentaire soient additionnées, et la pression additionnée forme la pression de travail.

3. Dispositif (22) selon la revendication 1, dans lequel
un circuit de précommande (32) est prévu dans lequel la pression de base et la pression supplémentaire sont commandées comme des pressions de précommande et
un dispositif de réglage (50) est prévu, lequel est configuré afin de régler une pression de puissance mise à disposition en fonction de la pression de base et la pression supplémentaire à partir du circuit de précommande (32) et de sortir comme pression de travail dans le circuit de commande de pression de travail (60).

4. Dispositif (22) selon la revendication 3, **caractérisé en ce que** le dispositif de réglage de circuit de commande de base du circuit de commande de base (56) est formé par une vanne de réduction de pression (36) pour régler la pression de base.

5. Dispositif (22) selon la revendication 3 ou 4, **caractérisé en ce que** le dispositif de commande du circuit de commande supplémentaire (26) est formé par un régulateur (38) pour régler la pression supplémentaire.

6. Dispositif (22) selon l'une quelconque des revendications 3 à 5, **caractérisé en ce qu'**une vanne de commutation (28a) est prévue en tant que vanne d'activation et de désactivation dans le circuit de pression de puissance, en amont d'un point d'introduction de la pression de puissance dans le circuit de commande de pilotage (32) et dans le circuit de commande de pression de travail (60).

7. Dispositif (22) selon l'une quelconque des revendications précédentes 3 à 6, **caractérisé en ce que** le dispositif de réglage (50) est configuré de sorte que la pression de base et la pression supplémentaire soient additionnées et que la pression de travail soit réglable avec cette pression composée.

8. Dispositif (22) selon l'une quelconque des revendications précédentes 3 à 7, **caractérisé en ce que** le circuit de commande supplémentaire (26) présente un capteur de pression (72a) et deux vannes de régulation (76, 78), avec lesquelles la pression de base peut être calibrée dans les deux directions.

9. Dispositif (22) selon l'une quelconque des revendications précédentes, **caractérisé en ce qu'**un automate d'état est prévu pour surveiller la pression de base / pression supplémentaire / pression de travail, qui est configuré de sorte qu'il effectue une coupure de la pression supplémentaire et/ou de la pression de base et/ou de la pression de travail dans des situations à définir.

10. Dispositif (22) selon l'une quelconque des revendications précédentes 1 à 8, **caractérisé en ce qu'**une unité électrique, électronique ou à microprocesseur est prévue pour surveiller la pression de travail / la pression supplémentaire / la pression de travail, qui est configurée de sorte qu'elle effectue une coupure de la pression supplémentaire et/ou de la pression de base et/ou de la pression de travail, dans des situations à définir.

11. Dispositif (22) selon l'une quelconque des revendications précédentes, **caractérisé en ce qu'**une vanne de commutation (28c) est prévue en amont du dispositif de commande du circuit de commande supplémentaire (26) afin de désactiver le circuit de commande supplémentaire en cas d'urgence.

12. Dispositif (22) selon l'une quelconque des revendications précédentes, **caractérisé en ce qu'**une vanne de commutation (28c) est prévue en aval du dispositif de commande du circuit de commande supplémentaire (26) afin de désactiver le circuit de commande supplémentaire en cas d'urgence.

13. Procédé de commande d'une force de contact d'un collecteur de courant (12) d'un véhicule (10) sur une ligne aérienne (20), dans lequel la force de contact est actionnée au moyen d'une pression de travail pneumatique ou hydraulique, avec les étapes suivantes :
- le réglage d'une pression de base dans un circuit de commande de base (56),
- le réglage d'une pression supplémentaire dans un circuit de commande supplémentaire (26),
**caractérisé par**
- l'addition de la pression de base et de la pression supplémentaire,
- l'introduction d'une pression de travail dans un circuit de commande de pression de travail (60), dans lequel la pression additionnée forme la pression de travail et la pression de travail est augmentée en additionnant la pression supplémentaire à la pression de base.

14. Procédé selon la revendication 13, dans lequel la pression de travail est régulée par une pression d'un circuit de précommande (32), dans lequel la pression du circuit de précommande (32) est formée en additionnant la pression de base et la pression supplémentaire..

15. Véhicule (10) avec au moins un dispositif (22) selon l'une quelconque des revendications 1 à 12.
